# FASCICULE DE BREVET EUROPEEN

(11) **EP 2 618 409 B1**
(45) Date de publication et mention de la délivrance du brevet: **19.10.2016**
(21) Numéro de dépôt: 13151469.7
(22) Date de dépôt: 16.01.2013
(51) Int. Cl.: H01M 4/62, H01M 10/0525, H01M 4/136, H01M 4/1397, H01M 4/08

(54) **Cathode pour cellule de batterie lithium-ion, son procédé de fabrication et cette batterie l'incorporant.**
Kathode für Lithiumionenbatterie, ihr Herstellungsprozess und Batterie diese enthaltend
Cathode for lithium ion battery, its manufacturing process and battery comprising it

(30) Priorité: 17.01.2012 FR 1250457
(43) Date de publication de la demande: 24.07.2013
(73) Titulaire: HUTCHINSON, 75008 Paris (FR)
(72) Inventeur: VOILLEQUIN, Baptiste, 77210 AVON (FR); AYME-PERROT, David, 68330 HUNINGUE (FR); DUFOUR, Bruno, 77430 CHAMPAGNE SUR SEINE (FR); SONNTAG, Philippe, 77210 AVON (FR)
(74) Mandataire: Gevers & Orès

(56) Documents cités:
- US-A1- 2004 121 232
- US-A1- 2009 305 132

## Description

La présente invention concerne une cathode utilisable dans une cellule de batterie lithium-ion, un procédé de fabrication de cette cathode et une batterie lithium-ion dont la ou les cellules incorporent cette cathode.

Il existe deux sortes principales de batteries d'accumulateurs au lithium : les batteries lithium métal, où l'électrode négative est composée de lithium métallique (matériau qui pose des problèmes de sécurité lorsqu'en présence d'un électrolyte liquide), et les batteries lithium-ion, où le lithium reste à l'état ionique.

Les batteries lithium-ion sont constituées d'au moins deux électrodes faradiques conductrices de polarités différentes, l'électrode négative ou anode (généralement en graphite) et l'électrode positive ou cathode (généralement en un oxyde d'un métal de transition tel qu'un oxyde de vanadium ou de cobalt, ou en un phosphate de fer lithié comme par exemple décrit dans les documents US-B1-6 514 640 ou WO-A1-2011/092283), électrodes entre lesquelles se trouve un séparateur qui est constitué d'un isolant électrique imbibé d'un électrolyte aprotique à base de cations Li+ assurant la conductivité ionique. Les électrolytes utilisés dans ces batteries lithium-ion sont usuellement constitués d'un sel de lithium par exemple de formule LiPF₆, LiAsF₆, LiCF₃SO₃ ou LiClO₄ qui est dissous dans un mélange de solvants non aqueux tels que l'acétonitrile, le tétrahydrofuranne ou le plus souvent un carbonate par exemple d'éthylène ou de propylène.

La matière active de la cathode d'une batterie lithium-ion permet une insertion/désinsertion réversible de lithium dans cette cathode, et plus la fraction massique de cette matière active y est élevée, plus la capacité de la cathode est grande. La cathode doit également contenir un composé conducteur électrique, tel que du noir de carbone et, pour lui conférer une cohésion mécanique suffisante, un liant polymérique. Une batterie lithium-ion est ainsi basée sur l'échange réversible de l'ion lithium entre l'anode et la cathode lors de la charge et la décharge de la batterie, et elle possède une haute densité d'énergie pour une masse très faible grâce aux propriétés physiques du lithium.

Les cathodes de batteries lithium-ion sont le plus souvent fabriquées par un procédé comprenant successivement une étape de dissolution ou de dispersion des différents ingrédients de la cathode dans un solvant, une étape d'étalement de la solution ou dispersion obtenue sur un collecteur métallique de courant, puis enfin une étape d'évaporation de ce solvant. De nombreux types de liants polymériques sont utilisables, parmi lesquels on peut citer en premier lieu le PVDF (polyfluorure de vinylidène) plus facilement compatible avec la cathode fonctionnant à haute tension de fonctionnement (plus de 4 V) à cause de la présence du fluor, mais aussi par exemple des polyacrylonitriles (PAN) avec des latex polybutylacrylates.

Les procédés de fabrication de cathodes de batteries lithium-ion qui utilisent un solvant organique présentent de nombreux inconvénients dans les domaines de l'environnement et de la sécurité. En particulier, il est dans ce cas nécessaire d'évaporer des quantités importantes de tels solvants qui sont toxiques ou inflammables.

Quant aux procédés qui utilisent un solvant aqueux pour fabriquer ces cathodes, leur inconvénient majeur est que la cathode doit être séchée de manière très poussée avant de pouvoir être utilisée, les traces d'eau étant connues pour limiter la durée de vie utile des accumulateurs au lithium.

Il est donc hautement souhaitable de préparer des cathodes pour batteries lithium-ion qui soient fabriquées sans utilisation de solvants. C'est dans ce contexte que des procédés de fabrication de cathodes pour batterie lithium-ion par des techniques de mise en oeuvre en voie fondue (par exemple par extrusion) ont été décrits dans la littérature.

Malheureusement, ces procédés par voie fondue génèrent des difficultés majeures dans le cas des batteries lithium-ion, qui requièrent de manière connue une fraction massique de matière active dans le mélange polymérique de la cathode d'au moins 90 % pour que celle-ci présente une capacité suffisante au sein de la batterie lithium-ion. Or, à de tels taux de matière active, la viscosité du mélange polymérique de cathode devient très élevée et entraîne des risques de sur-échauffement du mélange et de perte de cohésion mécanique après sa mise en oeuvre.

Le document US-B2-6 939 383 décrit l'extrusion d'une composition polymérique comprenant un copolymère poly(éthylène oxyde)-poly(propylène oxyde)-poly(glycidyl éther) à titre de polymère conducteur ionique, pour la mise en oeuvre sans solvant d'une cathode de batterie lithium-polymère. Cependant, la fraction massique de matière active dans l'unique composition polymérique de cathode fabriquée dans ce document est seulement de 64,5 %.

Le document US-A-5 749 927 présente un procédé de préparation en continu par extrusion de batteries lithium-polymère, qui comprend un mélangeage de la matière active avec un conducteur électrique et une composition d'électrolyte solide comprenant un polymère, un sel de lithium et un mélange carbonate de propylène / carbonate d'éthylène en large excès par rapport à ce polymère. Dans ce document, la fraction massique de matière active présente dans la composition polymérique de cathode est également inférieure à 70 %.

Ainsi, un inconvénient majeur de ces procédés connus de fabrication par voie fondue de cathodes pour accumulateurs lithium est que les fractions massiques de matière active dans la composition polymérique de cathode demeurent insuffisantes pour l'obtention d'une cathode de haute performance spécifiquement pour batterie lithium-ion.

Un but de la présente invention est donc de concevoir un procédé de fabrication d'une cathode qui remédie à l'ensemble des inconvénients précités, et ce but est atteint en ce que la Demanderesse vient de découvrir d'une manière surprenante que si l'on mélange à chaud par voie fondue et sans évaporation de solvant une matière active et des additifs comprenant une matrice élastomère réticulée, une charge électriquement conductrice et un composé organique non volatil (i.e. présentant un point d'ébullition supérieur à 150° C à la pression atmosphérique de 1,013 10⁵ Pa), alors on obtient une composition polymérique de cathode qui est utilisable dans une batterie lithium-ion à électrolyte à base d'un sel de lithium et d'un solvant non aqueux avec une fraction de cette matière active dans la composition nettement supérieure à celles obtenues à ce jour par voie fondue et avantageusement égale ou supérieure à 90 % et avec ce(s) composé(s) organique(s) qui est(sont) avantageusement utilisé(s) comme solvant de cet électrolyte.

Une cathode selon l'invention, utilisable dans une cellule de batterie lithium-ion à électrolyte à base d'un sel de lithium et d'un solvant non aqueux, est ainsi à base d'une composition polymérique obtenue par voie fondue et sans évaporation de solvant qui est le produit d'une réaction de mélangeage à chaud d'une matière active et d'additifs comprenant un liant polymérique et une charge électriquement conductrice, et la cathode est telle que ce liant est à base d'au moins un élastomère réticulé et que ces additifs comprennent en outre au moins un composé organique non volatil utilisable dans ce solvant d'électrolyte, la composition comprenant la matière active selon une fraction massique avantageusement égale ou supérieure à 90 %.

On notera que cette fraction massique très élevée de la matière active dans la cathode selon l'invention permet de conférer une performance élevée à la ou à chaque cellule ainsi obtenue et donc à la batterie lithium-ion l'incorporant.

On notera également que la répartition homogène dans la composition dudit au moins un élastomère réticulé permet d'assurer la tenue mécanique de la cathode.

Avantageusement, ladite matière active peut comprendre au moins un composé ou complexe polyanionique lithié ayant une tension de fonctionnement inférieure à 4 V et préférentiellement revêtu de carbone, tel qu'un phosphate d'un métal M lithié de formule LiMPO₄ (également connu sous le nom de phospho-olivine), tel qu'un phosphate de lithium et de fer revêtu de carbone répondant à la formule C-LiFePO₄.

On notera en effet que la matière active utilisée dans la composition de la présente invention peut être constituée de particules élémentaires revêtues de carbone, ou d'agglomérats de particules élémentaires comportant un revêtement ou dépôt de carbone.

De préférence, ledit au moins un élastomère est un élastomère diénique réticulé au peroxyde et, à titre encore plus préférentiel, un caoutchouc nitrile hydrogéné (HNBR). Egalement à titre préférentiel, ledit au moins un élastomère peut être présent dans ladite composition selon une fraction massique comprise entre 1 % et 5 %.

Avantageusement, ledit au moins un composé organique non volatil peut comprendre un carbonate, de préférence un carbonate d'au moins une oléfine telle que l'éthylène qui est préférentiellement utilisé dans la composition de l'électrolyte.

On notera que l'utilisation d'un tel carbonate, tel qu'un carbonate d'éthylène, permet avantageusement :
- d'accroître le taux de charges de la composition,
- d'éviter les risques inhérents à la toxicité des composés organiques volatils (COV) utilisés dans les procédés classiques de fabrication de cathodes, du fait que ce carbonate est un produit solide à température ambiante beaucoup moins toxique à manipuler, et
- d'utiliser cette composition polymérique de cathode sans évaporation préalable du carbonate et de faciliter l'intégration de l'électrolyte au sein de la cathode, du fait que ce carbonate est l'un des constituants principaux des électrolytes utilisés à ce jour au sein des batteries lithium-ion.

Egalement avantageusement, ledit au moins un composé organique peut être présent dans ladite composition selon une fraction massique comprise entre 0,1 % et 5 %.

On notera que l'invention peut permettre d'incorporer les sels nécessaires à l'utilisation de la cathode au cours de son procédé de fabrication.

Selon une autre caractéristique de l'invention, lesdits additifs peuvent comprendre en outre un système de réticulation qui est présent dans la composition selon une fraction massique comprise entre 0,05 % et 0,20 %, et qui comprend de préférence un peroxyde organique et un co-agent de réticulation dans le cas où ledit au moins un élastomère est un élastomère diénique tel qu'un caoutchouc nitrile hydrogéné (HNBR).

Selon une autre caractéristique de l'invention, ladite charge électriquement conductrice peut être choisie dans le groupe constitué par le noir de carbone, le graphite, le graphite expansé, les fibres de carbones, les nanotubes de carbone, le graphène et leurs mélanges, et est présente dans la composition selon une fraction massique comprise entre 1 % et 5 %.

Un procédé de fabrication selon l'invention d'une cathode telle que définie ci-dessus est caractérisé en ce qu'il comprend :
a) un mélangeage par voie fondue et sans aucune évaporation de solvant, dans un mélangeur interne ou une extrudeuse, de ladite matière active et desdits additifs comprenant ledit liant et ledit composé organique à l'état solide pour l'obtention de ladite composition à l'état réticulable, cette matière active comprenant de préférence au moins un composé ou complexe polyanionique lithié tel qu'un phosphate de fer lithié revêtu de carbone de formule C-LiFePO₄, et
b) une réticulation et éventuellement une mise en forme à chaud de cette composition, pour l'obtention de ladite composition réticulée.

Selon une autre caractéristique de l'invention, l'on peut mettre en oeuvre l'étape a) en mélangeant ledit liant à un pré-mélange à l'état de poudre des autres ingrédients de la composition, par exemple à une température comprise entre 60° C et 80° C dans un mélangeur interne.

Selon une autre caractéristique de l'invention, l'on peut mettre en oeuvre l'étape b) par une compression à chaud de la composition réticulable.

Avantageusement, ce procédé de l'invention peut comprendre ensuite une étape c) de calandrage de ladite composition réticulée pour la déposer sur un collecteur métallique de courant qui équipe ladite cathode.

Une batterie lithium-ion selon l'invention comprend au moins une cellule à anode par exemple à base de graphite, à cathode telle que définie ci-dessus et à électrolyte à base d'un sel de lithium et d'un solvant non aqueux.

Selon une autre caractéristique avantageuse de l'invention, ledit solvant d'électrolyte peut comprendre ledit au moins un composé organique non volatil de la cathode.

Selon un autre aspect de l'invention, ladite cathode comprend un collecteur métallique de courant mis en contact avec au moins un film constitué de ladite composition polymérique.

D'autres caractéristiques, avantages et détails de la présente invention ressortiront à la lecture de la description suivante d'un exemple de réalisation de l'invention, donné à titre illustratif et non limitatif.

### Exemple 1 :

On a préparé dans un mélangeur interne Haacke, à 70° C, une composition polymérique de cathode ayant la composition suivante, exprimée en fractions massiques (%):

| | |
|---|---|
| Liant HNBR (« Therban 4307 ») | 2,68 |
| Noir de carbone | 2,68 |
| Carbonate d'éthylène | 0,54 |
| Matière active C-LiFePO₄ | **93,97** |
| Système de réticulation : | |
| Dicumyl peroxyde | 0,08 |
| Triallyl cyanurate (TAC) | 0,05 |

On a introduit successivement dans ce mélangeur interne les différents composés, d'abord le caoutchouc nitrile hydrogéné à titre d'élastomère diénique réticulable (liant HNBR) puis un pré-mélange sous forme de poudre des autres ingrédients ci-dessus. Après ce mélangeage puis une compression à chaud à 170° C pendant 10 minutes permettant simultanément la réticulation du liant, on a directement obtenu une électrode de 1 mm d'épaisseur apte à former une cathode à l'intérieur d'une cellule de batterie lithium-ion, après dépôt sur un collecteur de courant équipant cette cathode.

On notera que la fraction massique très élevée (supérieure à 93 %) de la matière active dans cette cathode permet de conférer une performance élevée à la ou à chaque cellule ainsi obtenue et donc à la batterie lithium-ion l'incorporant.

### Exemple « témoin » non conforme à l'invention :

On a préparé par dispersion/ dissolution dans un solvant constitué de MIBK (méthyl isobutyl cétone) - i.e. suivant un procédé non conforme au procédé par voie fondue de l'invention - une composition « témoin » caractérisée par la même formulation (i.e. mêmes ingrédients et quantités) que celle de l'exemple 1, cette composition «témoin» étant déposée par enduction sur un collecteur de courant.

On constate que la cathode « témoin » obtenue par dispersion/ dissolution présente des caractéristiques physiques intrinsèques qui sont très différentes de celles de la cathode de l'exemple 1, notamment en termes de morphologie (clichés au « MEB » : microscope électronique à balayage), de densité apparente et de conductivité électrique, comme visible au tableau 1 ci-après.

En particulier, on peut noter que la densité apparente de cette cathode obtenue par voie fondue (exemple 1 sans solvant) est nettement supérieure à 1 - étant comprise entre 1,5 et 2 - soit plus de deux fois supérieure à la densité apparente de la cathode « témoin » obtenue avec solvant.

**Tableau 1 :**

| | Cathode de l'exemple 1 | Cathode « témoin » |
|---|---|---|
| Densité apparente | 1,854 | 0,777 |
| Conductivité électrique (S/cm) | 0,0392 | 0,0065 |

## Revendications

1. Cathode utilisable dans une cellule de batterie lithium-ion à électrolyte à base d'un sel de lithium et d'un solvant non aqueux, la cathode étant à base d'une composition polymérique obtenue par voie fondue et sans évaporation de solvant qui est le produit d'une réaction de mélangeage à chaud d'une matière active et d'additifs comprenant un liant polymérique et une charge électriquement conductrice, **caractérisée en ce que** ledit liant est à base d'au moins un élastomère réticulé et **en ce que** lesdits additifs comprennent en outre au moins un composé organique non volatil utilisable dans ledit solvant d'électrolyte, la composition comprenant ladite matière active selon une fraction massique égale ou supérieure à 90 %.

2. Cathode selon la revendication 1, **caractérisée en ce que** ladite matière active comprend au moins un composé ou complexe polyanionique lithié ayant une tension de fonctionnement inférieure à 4 V et de préférence revêtu de carbone, tel qu'un phosphate d'un métal M lithié de formule LiMPO₄ où M est par exemple un atome de fer.

3. Cathode selon la revendication 1 ou 2, **caractérisée en ce que** ledit au moins un élastomère est un élastomère diénique réticulé au peroxyde, de préférence un caoutchouc nitrile hydrogéné (HNBR).

4. Cathode selon une des revendications précédentes, **caractérisée en ce que** ledit au moins un élastomère est présent dans ladite composition selon une fraction massique comprise entre 1 % et 5 %.

5. Cathode selon une des revendications précédentes, **caractérisée en ce que** ledit au moins un composé organique comprend un carbonate, de préférence un carbonate d'au moins une oléfine telle que l'éthylène.

6. Cathode selon une des revendications précédentes, **caractérisée en ce que** ledit au moins un composé organique est présent dans ladite composition selon une fraction massique comprise entre 0,1 % et 5 %.

7. Cathode selon une des revendications précédentes, **caractérisée en ce que** lesdits additifs comprennent en outre un système de réticulation qui est présent dans ladite composition selon une fraction massique comprise entre 0,05 % et 0,20 %, et qui comprend de préférence un peroxyde organique et un co-agent de réticulation dans le cas où ledit au moins un élastomère est un élastomère diénique tel qu'un caoutchouc nitrile hydrogéné (HNBR).

8. Cathode selon une des revendications précédentes, **caractérisée en ce que** ladite charge électriquement conductrice est choisie dans le groupe constitué par le noir de carbone, le graphite, le graphite expansé, les fibres de carbones, les nanotubes de carbone, le graphène et leurs mélanges, et est présente dans ladite composition selon une fraction massique comprise entre 1 % et 5 %.

9. Procédé de fabrication d'une cathode selon une des revendications précédentes, **caractérisé en ce qu'**il comprend :
a) un mélangeage par voie fondue et sans aucune évaporation de solvant, dans un mélangeur interne ou une extrudeuse, de ladite matière active et desdits additifs comprenant ledit liant et ledit composé organique à l'état solide pour l'obtention de ladite composition à l'état réticulable, cette matière active comprenant de préférence au moins un composé ou complexe polyanionique lithié tel qu'un phosphate de fer lithié revêtu de carbone de formule C-LiFePO₄, et
b) une réticulation et éventuellement une mise en forme à chaud de cette composition, pour l'obtention de ladite composition réticulée.

10. Procédé de fabrication selon la revendication 9, **caractérisé en ce que** l'on met en oeuvre l'étape a) en mélangeant ledit liant à un pré-mélange à l'état de poudre des autres ingrédients de la composition, par exemple à une température comprise entre 60° C et 80° C dans un mélangeur interne.

11. Procédé de fabrication selon la revendication 9 ou 10, **caractérisé en ce que** l'on met en oeuvre l'étape b) par une compression à chaud de ladite composition réticulable.

12. Procédé de fabrication selon une des revendications 9 à 11, **caractérisé en ce qu'**il comprend ensuite une étape c) de calandrage de ladite composition réticulée pour la déposer sur un collecteur métallique de courant qui équipe ladite cathode.

13. Batterie lithium-ion comprenant au moins une cellule à anode par exemple à base de graphite, à cathode et à électrolyte à base d'un sel de lithium et d'un solvant non aqueux, **caractérisée en ce que** ladite cathode est telle que définie à l'une des revendications 1 à 8.

14. Batterie lithium-ion selon la revendication 13, **caractérisée en ce que** ledit solvant d'électrolyte comprend ledit au moins un composé organique non volatil de la cathode.

15. Batterie lithium-ion selon la revendication 13 ou 14, **caractérisée en ce que** ladite cathode comprend un collecteur métallique de courant mis en contact avec au moins un film constitué de ladite composition polymérique.

## Patentansprüche

1. Kathode, welche in einer Lithium-Ionen-Batteriezelle verwendet werden kann, mit Elektrolyt auf Basis eines Lithiumsalzes und eines nicht wässrigen Lösungsmittels, wobei die Kathode auf einer Polymerzusammensetzung basiert, welche durch Schmelzen und ohne Verdampfen von Lösungsmittel erhalten wird und das Reaktionsprodukt der Vermischung in heißem Zustand eines aktiven Materials und von Zusatzstoffen ist, welche ein polymeres Bindemittel und einen elektrisch leitfähigen Füllstoff umfassen, **dadurch gekennzeichnet, dass** das besagte Bindemittel auf mindestens einem vernetzten Elastomer basiert und dadurch, dass die besagten Zusatzstoffe des Weiteren mindestens eine nicht flüchtige organische Verbindung umfassen, welche in dem besagten Elektrolyt-Lösungsmittel verwendet werden kann, wobei die Zusammensetzung das besagte aktive Material in einem Masseanteil von gleich oder größer 90 % umfasst.

2. Kathode nach Anspruch 1, **dadurch gekennzeichnet, dass** das besagte aktive Material mindestens eine(n) lithiierte(n) polyanionische(n) Verbindung oder Komplex mit einer Betriebsspannung von weniger als 4 V und bevorzugt kohlenstoffbeschichtet umfasst, wie etwa ein Phosphat eines lithiierten Metalls M mit der Formel LiMPO₄, wobei M zum Beispiel ein Eisenatom ist.

3. Kathode nach Anspruch 1 oder 2, **dadurch gekennzeichnet, dass** das besagte mindestens eine Elastomer ein mit Peroxid vernetztes Dien-Elastomer, bevorzugt ein hydrierter Nitrilkautschuk (HNBR) ist.

4. Kathode nach einem der vorstehenden Ansprüche, **dadurch gekennzeichnet, dass** das besagte mindestens eine Elastomer in der besagten Zusammensetzung in einem Masseanteil von zwischen 1 % und 5 % vorliegt.

5. Kathode nach einem der vorstehenden Ansprüche, **dadurch gekennzeichnet, dass** die besagte mindestens eine organische Verbindung ein Carbonat umfasst, bevorzugt ein Carbonat von mindestens einem Olefin wie etwa Ethylen.

6. Kathode nach einem der vorstehenden Ansprüche, **dadurch gekennzeichnet, dass** die besagte mindestens eine organische Verbindung in der besagten Zusammensetzung in einem Masseanteil von zwischen 0,1 % und 5 % vorliegt.

7. Kathode nach einem der vorstehenden Ansprüche, **dadurch gekennzeichnet, dass** die besagten Zusatzstoffe des Weiteren ein Vernetzungssystem umfassen, das in der besagten Zusammensetzung in einem Masseanteil von zwischen 0,05 % und 0,20 % vorliegt, und das bevorzugt ein organisches Peroxid und ein Co-Vernetzungsmittel umfasst in dem Fall, dass das besagte mindestens eine Elastomer ein Dien-Elastomer wie etwa ein hydrierter Nitrilkautschuk (HNBR) ist.

8. Kathode nach einem der vorstehenden Ansprüche, **dadurch gekennzeichnet, dass** der besagte elektrisch leitfähige Füllstoff ausgewählt ist aus der Gruppe bestehend aus Ruß, Graphit, expandiertem Graphit, Kohlenstofffasern, Kohlenstoffnanoröhrchen, Graphen und deren Mischungen, und in der besagten Zusammensetzung in einem Masseanteil von zwischen 1 % und 5 % vorliegt.

9. Verfahren zur Herstellung einer Kathode nach einem der vorstehenden Ansprüche, **dadurch gekennzeichnet, dass** es umfasst:
a) ein Vermischen durch Schmelzen und ohne jegliches Verdampfen von Lösungsmittel, in einem Innenmischer oder Extruder, von dem besagten aktiven Material und den besagten Zusatzstoffen, welche das besagte Bindemittel und die besagte organische Verbindung in festem Zustand umfassen, um die besagte Zusammensetzung im vernetzbaren Zustand zu erhalten, wobei dieses aktive Material bevorzugt mindestens eine(n) lithiierte(n) polyanionische(n) Verbindung oder Komplex wie etwa ein mit kohlenstoffbeschichtetes lithiiertes Eisenphosphat der Formel C-LiFePO₄ umfasst, und
b) ein Vernetzen und gegebenenfalls ein Warmformen dieser Zusammensetzung, um die besagte vernetzte Zusammensetzung zu erhalten.

10. Herstellungsverfahren nach Anspruch 9, **dadurch gekennzeichnet, dass** Schritt a) ausgeführt wird, indem das besagte Bindemittel mit einem Vorgemisch der anderen Bestandteile der Zusammensetzung in pulverförmigen Zustand, zum Beispiel bei einer Temperatur von zwischen 60 °C und 80 °C in einem Innenmischer vermischt wird.

11. Herstellungsverfahren nach Anspruch 9 oder 10, **dadurch gekennzeichnet, dass** Schritt b) ausgeführt wird durch ein Heißpressen der besagten vernetzbaren Zusammensetzung.

12. Herstellungsverfahren nach einem der Ansprüche 9 bis 11, **dadurch gekennzeichnet, dass** es anschließend einen Schritt c) des Kalandrierens der besagten vernetzten Zusammensetzung umfasst, um sie auf einem metallischen Stromkollektor aufzubringen, mit dem die besagte Kathode ausgestattet ist.

13. Lithium-Ionen-Batterie, welche mindestens eine Zelle mit Anode zum Beispiel auf Basis von Graphit, mit Kathode und mit Elektrolyt auf Basis eines Lithiumsalzes und eines nicht wässrigen Lösungsmittels umfasst, **dadurch gekennzeichnet, dass** die besagte Kathode derart beschaffen ist, wie in einem der Ansprüche 1 bis 8 definiert.

14. Lithium-Ionen-Batterie nach Anspruch 13, **dadurch gekennzeichnet, dass** das besagte Elektrolyt-Lösungsmittel die besagte mindestens eine nicht flüchtige organische Verbindung der Kathode umfasst.

15. Lithium-Ionen-Batterie nach Anspruch 13 oder 14, **dadurch gekennzeichnet, dass** die besagte Kathode einen metallischen Stromkollektor umfasst, der mit mindestens einem Film in Kontakt gebracht ist, welcher von der besagten Polymerzusammensetzung gebildet wird.

## Claims

1. Cathode that can be used in a lithium-ion battery cell with an electrolyte based on a lithium salt and a non-aqueous solvent, the cathode being based on a polymeric composition obtained by a molten method and without solvent evaporation that is the product of a reaction of hot compounding of an active material and additives comprising a polymeric binder and an electrically conductive filler, **characterised in that** said binder is based on at least one crosslinked elastomer and **in that** said additives further comprise at least one non-volatile organic compound that can be used in said electrolyte solvent, the composition comprising said active material in a proportion by mass equal to or greater than 90%

2. Cathode according to claim 1, **characterised in that** said active material comprises at least one lithiated polyanionic compound or complex having an operating voltage below 4 V and preferably coated with carbon, such as a phosphate of a lithiated metal M of formula LiMPO₄, where M is for example an iron atom.

3. Cathode according to claim 1 or 2, **characterised in** said at least one elastomer is a diene elastomer crosslinked with peroxide, preferably a hydrogenated nitrile rubber (HNBR).

4. Cathode according to any one of the preceding claims, **characterised in that** said at least one elastomer is present in said composition at a proportion by mass of between 1% and 5%.

5. Cathode according to any one of the preceding claims, **characterised in that** said at least one organic compound comprises a carbonate, preferably a carbonate of at least one olefin such as ethylene.

6. Cathode according to any one of the preceding claims, **characterised in that** said at least one organic compound is present in said composition at a proportion by mass of between 0.1% and 5%.

7. Cathode according to any one of the preceding claims, **characterised in that** said additives further comprise a crosslinking system that is present in said composition at a proportion by weight of between 0.05% and 0.20%, and which preferably comprises an organic peroxide and a crosslinking co-agent in the case where said at least one elastomer is a diene elastomer such as a hydrogenated nitrile rubber (HNBR).

8. Cathode according to any one of the preceding claims, **characterised in that** said electrically conductive filler is chosen from the group consisting of carbon black, graphite, expanded graphite, carbon fibres, carbon nanotubes, graphene and mixtures thereof, and is present in said composition at a proportion by mass of between 1% and 5%.

9. Method for manufacturing a cathode according to any one of the preceding claims, **characterised in that** it comprises:
a) compounding by molten method and without any solvent evaporation, in an internal mixer or an extruder, of said active material and said additives comprising said binder and said organic compound in solid state for obtaining said composition in a crosslinkable state, said active material preferably comprising at least one lithiated polyanionic compound or complex such as a lithiated iron phosphate coated with carbon of formula C-LiFePO₄, and
b) crosslinking and optionally hot shaping of this composition, for obtaining said crosslinked composition.

10. Manufacturing method according to claim 9, **characterised in that** step a) is carried out by mixing said binder with a premix in powder state of the other ingredients of the composition, for example at a temperature of between 60°C and 80°C in an internal mixer.

11. Manufacturing method according to claim 9 or 10, **characterised in that** step b) is carried out by hot compression of said crosslinkable composition.

12. Manufacturing method according to any one of claims 9 to 11, **characterised in that** it next comprises a step c) of calendering said crosslinked composition in order to deposit it on a metal current collector that equips said cathode.

13. Lithium-ion battery comprising at least one cell with an anode for example based on graphite, with a cathode and with an electrolyte based on a lithium salt and a non-aqueous solvent, **characterised in that** said cathode is as defined in any one of claims 1 to 8.

14. Lithium-ion battery according to claim 13, **characterised in that** said electrolyte solvent comprises said at least one non-volatile organic compound of the cathode.

15. Lithium-ion battery according to claim 13 or 14, **characterised in that** said cathode comprises a metal current collector in contact with at least one film made of said polymeric composition.
